# FASCICULE DE BREVET EUROPEEN

(11) **EP 4 121 246 B1**
(45) Date de publication et mention de la délivrance du brevet: **13.08.2025**
(21) Numéro de dépôt: 21732944.0
(22) Date de dépôt: 19.04.2021
(51) Int. Cl.: B23K 26/142, B23K 26/38

(54) **DISPOSITIF DE DÉCOUPE LASER D'UNE PIÈCE ET DE COLLECTE DES ÉLÉMENTS PRODUITS ET PROCÉDÉ DE MISE EN OEUVRE**
VORRICHTUNG ZUM LASERSCHNEIDEN EINES WERKSTÜCKS UND ZUM SAMMELN DER HERGESTELLTEN ELEMENTE UND IMPLEMENTIERUNGSVERFAHREN
DEVICE FOR LASER CUTTING A WORKPIECE AND FOR COLLECTING THE ELEMENTS PRODUCED, AND IMPLEMENTATION METHOD

(30) Priorité: 22.04.2020 FR 2004029
(43) Date de publication de la demande: 25.01.2023
(73) Titulaire: Onet Technologies CN, 13009 Marseille (FR); Institut de Radioprotection et de Sûreté Nucléaire, 92260 Fontenay aux Roses (FR)
(72) Inventeur: THIERIOT, Gwenael, 30200 CHUSCLAN (FR); DELALEZ, Rémi L., 84500 BOLLENE (FR); ROULET, Damien T., 26130 SAINT PAUL TROIS CHATEAUX (FR); GELAIN, Thomas G., 28700 MAISONS (FR); PORCHERON, Emmanuel J., 91400 SACLAY (FR)
(74) Mandataire: Cabinet Beau de Loménie
(86) Numéro de dépôt international: PCT/FR2021/050682
(87) Numéro de publication internationale: WO 2021/214405

(56) Documents cités:
- US-A- 3 742 183
- US-A1- 2013 146 674
- US-A1- 2018 133 838
- US-A1- 2018 345 416
- US-A1- 2019 126 405

## Description

### Domaine Technique

La présente demande est relative au domaine nucléaire et plus particulièrement au domaine du démantèlement d'installations nucléaires.

La présente invention concerne un dispositif de capture et de transport d'éléments produits lors de la découpe d'une pièce par un laser de puissance, ladite pièce comprenant notamment des éléments radioactifs. La présente invention concerne également un procédé de découpe laser d'une pièce et de collecte des éléments produits lors de la découpe de la pièce, ladite pièce comprenant notamment des éléments radioactifs.

### Technique antérieure

Le démantèlement regroupe les opérations visant à évacuer les matières et déchets radioactifs, à retirer les matériels présents, à assainir et à démonter les bâtiments d'une installation nucléaire en fin de vie ou à l'arrêt définitif. C'est un projet industriel de très longue durée avec un examen de sûreté à chaque étape afin d'assurer la maîtrise des risques des opérations.

Le démantèlement d'une installation nucléaire nécessite la mise en œuvre de conditions d'opération hautement sécurisées afin de ne pas contaminer l'environnement, les personnes participant directement ou indirectement au démantèlement ou encore les personnes se trouvant à proximité immédiate ou éloignée du site de démantèlement. La maîtrise des risques de contamination et leur diminution est donc un des objectifs clé lors du démantèlement d'une installation nucléaire.

Ce démantèlement est également nécessaire après un accident nucléaire comme par exemple sur le site de Fukushima où le démantèlement est en cours de réalisation.

Une des étapes clés du démantèlement de l'installation nucléaire située à Fukushima correspond au retrait des combustibles dégradés dans le cœur des réacteurs (« Le corium de Fukushima Daiichi : formation, état actuel et R&D en vue de sa récupération. », Christophe Journeau, Damien Roulet, 16ème Congrès Francophone de Techniques Laser pour la mécanique des fluides, CNRS, Centrale Supélec, Université Paris Saclay, IRSN, Sep 2018, Dourdan, France). Ces combustibles correspondent à la dégradation du cœur du réacteur et sont aussi appelés « corium », celui-ci étant généralement détecté et observé à l'aide d'un robot envoyé au sein de l'enceinte de confinement du réacteur. Le corium provient de la fusion du cœur de réacteur et se compose d'un amas de combustibles et de matériaux de structures supportant le combustible dans la cuve lors du fonctionnement normal du réacteur, qui ont fondus et se sont mélangés, et maintenus en fusion par le dégagement de la puissance résiduelle due à la décroissance radioactive des produits de fission piégés dans le corium (« Les accident de fusion du cœur des réacteurs nucléaires de puissance », Didier Jacquemain, Institut de Radioprotection et de Sûreté Nucléaire, 2013, p.70). La présence de corium, en grandes quantités dans les réacteurs d'installations nucléaires telles que celles présentes à Fukushima représente une source majeure de risque radioactif pour les opérateurs et l'environnement. Il est donc primordial de diminuer ce risque et pour ce faire il est nécessaire de retirer ce corium et de le stocker dans des conditions stables et maîtrisées.

L'extraction du corium nécessite son découpage en plusieurs morceaux en vue de son retrait et de son conditionnement puis refroidissement dans des fûts métalliques sur le site de la centrale avant leur stockage définitif. La découpe du corium présente plusieurs difficultés étant donné que le corium est un matériau hétérogène et complexe et peut se trouver sous différentes formes et à différents emplacements dans le bloc réacteur, qu'il est par ailleurs extrêmement radioactif (10 à 1000Gy/h environ) ce qui nécessite l'intervention de moyens télé opérés pour toutes les opérations ayant lieu à l'intérieur de l'enceinte de confinement, et que l'accès au corium est difficile car l'intérieur du bâtiment réacteur est très contaminé, partiellement détruit ou partiellement submergé afin de garantir le refroidissement de combustible encore présent. Parmi les nombreuses techniques de découpes existantes, par exemple par carottage, fraisage, cisaillage, par découpe plasma ou par jet d'eau, la technique de découpe laser est une possibilité envisagée notamment pour le site de Fukushima du fait de ses performances de découpe, de sa facilité de mise en œuvre par télé opération et de sa robustesse dans ce type d'environnement. Cependant, lors de la découpe laser, il est nécessaire de disposer d'une solution efficace pour limiter au mieux la propagation des aérosols, gaz et scories formés en tant que déchets secondaires du procédé de découpe laser et les collecter efficacement afin de limiter les risques de dispersion de ces éléments radioactifs au sein de l'enceinte de confinement. En effet, l'absence de solution pour collecter les éléments radioactifs secondaires générés lors de la découpe pourrait mener à une mise en suspension de ces éléments au sein de l'enceinte de confinement, ce qui présenterait un risque de contamination de l'environnement proche ou éloigné du corium en particulier dans le cas d'une perte d'étanchéité totale ou partielle de l'enceinte par exemple en cas de séisme. Une simulation de la découpe laser du corium a été effectuée par un groupe de recherche français, au sein d'une enceinte spécifique appelée DELIA, développée par le Commissariat de l'Energie Atomique, et a notamment permis de collecter une partie des aérosols produits et de les caractériser (Peillon et al, « Aerosol characterization and particle scrubbing efficiency of underwater operations during laser cutting of steel components for dismantling of nuclear facilities », Aerosol and air quality research, 2017, 17:1463-1473). Dans cette enceinte, on retrouve une cheminée d'extraction qui est connectée à une ligne de caractérisation des aérosols composée d'un tuyau cylindrique en acier inoxydable, dans lequel la ventilation d'air est maintenue à 100 m³/h et comprend deux sondes d'échantillonnage connectées à deux différents filtres. Cette enceinte comprend également une cheminée permettant la recirculation de l'air dans l'enceinte, comprenant un filtre THE pour collecter les éléments non captés par la cheminée d'extraction. Ainsi, cette solution ne permet pas de collecter les éléments produits lors de la découpe laser du corium, au plus près de la zone de découpe pour assurer une collecte optimale desdits éléments et ainsi prévenir tout risque lié à une éventuelle perte d'étanchéité de l'enceinte.

On comprend qu'il est nécessaire de disposer d'une solution pour collecter efficacement les éléments secondaires radioactifs de toute taille produits par la découpe au laser du corium, peu importe le type d'enceinte dans laquelle la découpe est effectuée, afin de limiter les risques de dispersion de ces éléments et de contamination de l'environnement et du personnel.

De façon plus générale, il existe un besoin de disposer d'une solution permettant de collecter efficacement les éléments secondaires de toute taille produits par la découpe au laser d'une pièce comprenant des éléments radioactifs. En effet, les seules solutions existantes à ce jour, consistent à procéder aux opérations de découpe au sein d'une enceinte étanche ventilée et munie de filtres. Or, tel qu'énoncé en amont ces solutions ne permettent pas de collecter les éléments en particulier radioactifs, produits lors de la découpe au plus près de la zone de découpe afin d'assurer une collecte optimale desdits éléments mais aussi d'éviter leur mise en suspension au sein de l'enceinte et ainsi limiter tout risque lié à une éventuelle perte d'étanchéité de l'enceinte. Un dispositif de découpe laser d'une pièce et de collecte des éléments produits par la découpe selon l'art antérieur est décrit dans le document US 2013/146674.

### Exposé de l'invention

Un premier objet de l'invention concerne un dispositif de découpe laser d'une pièce et de collecte des éléments produits par la découpe, tel que décrit à la revendication 1.

Un deuxième objet de l'invention concerne un procédé découpe laser d'une pièce et de collecte des éléments produits par la découpe mettant en œuvre un dispositif selon l'une des revendications 1 à 3, tel que décrit à la revendication 4.

### Brève description des dessins

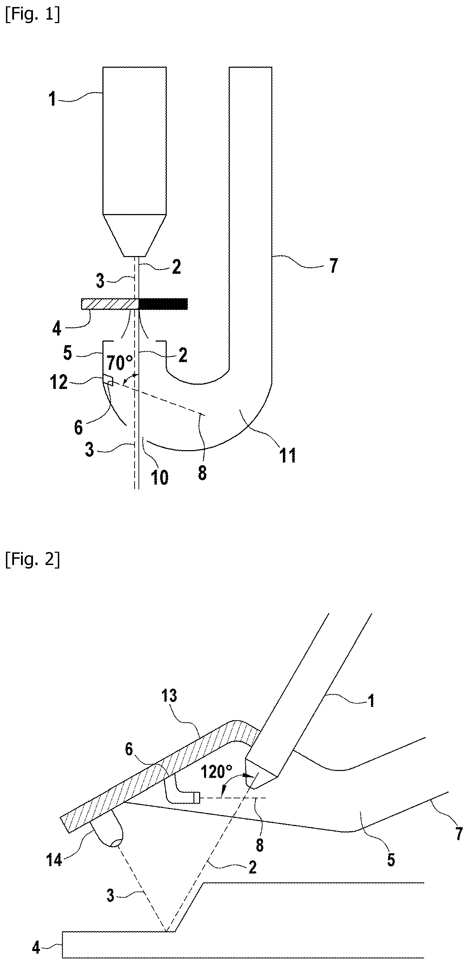

[Fig. 1] La figure 1 représente un dispositif selon l'invention pour la découpe d'une pièce côté débouchant d'une pièce à découper. On y distingue une tête d'irradiation laser (1) d'un laser de puissance apte à émettre un faisceau laser (2) et un flux d'air de chasse (3) en direction de la pièce à découper (4), une cloche de captation des éléments produits par la découpe reliée de façon amovible à la tête d'irradiation laser, ladite cloche comprenant a) une pièce évidée (5) comprenant un échappement (7) et b) une buse de soufflage (6) apte à émettre un flux d'air comprimé (8) en direction de l'échappement (7) de la pièce évidée (5).
[Fig. 2] La figure 2 représente un dispositif non couvert par l'invention pour la découpe d'une pièce côté non débouchant d'une pièce à découper. On y distingue une tête d'irradiation laser (1) d'un laser de puissance apte à émettre un faisceau laser (2) et un flux d'air de chasse (3) via un moyen de soufflage (14) en direction de la pièce à découper (4), une cloche de captation des éléments produits par la découpe reliée de façon amovible à la tête d'irradiation laser, ladite cloche comprenant a) une pièce évidée (5) comprenant un échappement (7) et b) une buse de soufflage (6) apte à émettre un flux d'air comprimé (8) en direction de l'échappement (7) de la pièce évidée (5).

### Description détaillée

Pour répondre aux besoins de l'art antérieur, la Demanderesse propose un dispositif de découpe laser d'une pièce et de collecte des éléments produits par cette découpe, notamment les éléments radioactifs. Le dispositif proposé par la présente invention permet avantageusement de découper une pièce comprenant des éléments radioactifs, ladite pièce pouvant par exemple être du corium, tout en assurant une collecte efficace des éléments secondaires produits par la découpe au plus près de la zone de découpe. Le dispositif et le procédé de mise en œuvre de ce dispositif, proposés par la présente invention permettent ainsi de limiter la dispersion des éléments secondaires produits lors de la découpe dans et hors de l'environnement de découpe et de limiter ainsi les éventuels risques de contamination radioactive. L'invention proposée permet ainsi de limiter voire d'éviter la dispersion des éléments secondaires notamment radioactifs, produits lors de la découpe au sein de l'enceinte de confinement dans laquelle elle est mise en œuvre. Cela permet ainsi avantageusement de limiter les risques de contamination secondaire en cas de perte totale ou partielle de l'étanchéité de l'enceinte mais aussi de moins solliciter la ligne d'extraction de l'enceinte, de limiter les actions de maintenance de l'enceinte et de prolonger la durée de vie de l'enceinte. De préférence, la présente invention est destinée à être mise en œuvre dans le cadre d'opérations de découpe et/ou de démantèlement nécessitant la mise en œuvre de moyens téléopérés.

Un premier objet de l'invention concerne donc un dispositif de découpe laser d'une pièce et de collecte des éléments produits par la découpe, comprenant :
- un laser de puissance apte à découper la pièce (4), comprenant une tête d'irradiation laser (1) apte à émettre un faisceau laser (2) et un flux d'air de chasse (3) et
- une cloche de captation des éléments produits par la découpe reliée de façon amovible à la tête d'irradiation laser (1), ladite cloche comprenant a) une pièce évidée (5) comprenant un échappement (7) et b) une buse de soufflage (6) apte à émettre un flux d'air comprimé (8) en direction de l'échappement (7) de la pièce évidée (5).

Dans le cadre de la présente invention, on entend par « éléments produits par la découpe laser d'une pièce », les éléments de matière de la pièce libérés, issus, produits lors de la découpe laser de ladite pièce. La nature des éléments produits dépend de la nature du matériau de la pièce à découper.

Les éléments produits par la découpe laser peuvent être de taille variable, ces éléments peuvent par exemple être des particules, des poussières, des fumées, des scories, des aérosols. Les aérosols peuvent par exemple avoir une taille comprise entre 100 nm et 10 µm. Les poussières peuvent par exemple avoir une taille comprise entre 10 µm et 500 µm. Les scories peuvent par exemple avoir une taille comprise entre 500 µm et 10 mm. Lorsque la pièce découpée est une pièce comprenant des éléments radioactifs, par exemple lorsque la pièce est du corium, alors tout ou partie des éléments produits par la découpe laser d'une pièce sont des éléments radioactifs.

Dans le cadre de la présente invention, le laser de puissance mis en œuvre comprend une « tête d'irradiation laser » qui comprend une source de lumière cohérente générant un faisceau laser de puissance, un module optique pour focaliser ce faisceau et le diriger selon au moins un axe sur la surface de la pièce à découper et un moyen de soufflage apte à émettre un flux d'air de chasse correspondant à un flux d'air comprimé. En particulier, la tête d'irradiation laser mise œuvre dans le dispositif selon l'invention comprend un moyen de soufflage. Plus particulièrement, le moyen de soufflage compris par la tête d'irradiation est apte à émettre un flux d'air de chasse permettant de diriger les éléments produits lors de la découpe laser en direction de l'échappement de la pièce évidée de la cloche. Selon un premier aspect, le moyen de soufflage compris par la tête d'irradiation laser est disposé autour de la source de lumière et du module optique. Selon un second aspect, le moyen de soufflage compris par la tête d'irradiation est disposé sur un module solidaire de la tête d'irradiation, ledit module faisant partie de la tête d'irradiation. Selon chacun des aspects ci-dessus, le moyen de soufflage émet un flux d'air comprimé dit flux d'air de chasse, en direction du point d'impact du faisceau laser sur la pièce à découper. De préférence, le moyen de soufflage compris par la tête d'irradiation laser est une buse de soufflage éventuellement reliée à un compresseur d'air. Le laser de puissance mis en œuvre dans le dispositif selon la présente invention est apte à découper une pièce en fonction des paramètres de mise en œuvre du laser tels que la longueur d'ondes du faisceau laser, la puissance du faisceau laser et le débit du flux d'air de chasse.

De préférence, la tête d'irradiation du laser de puissance mis en œuvre selon l'invention émet un faisceau laser d'une longueur d'ondes comprise entre 650 et 1090 nm, de préférence entre 1030 et 1070 nm. De préférence encore, le faisceau laser émis par la tête d'irradiation présente une puissance comprise entre 4 et 14 kW.

En particulier, dans le cadre de la présente invention le flux d'air de chasse émis par le moyen de soufflage compris par la tête d'irradiation présente un débit compris entre 100 et 2000 litres/minute.

Selon un aspect particulièrement préféré, la tête d'irradiation du laser de puissance émet un faisceau laser d'une longueur d'ondes comprise entre 1030 et 1070 nm, avec une puissance comprise entre 4 et 14 kW et émet un flux d'air de chasse présentant un débit compris entre 400 et 2000 litres/minute.

La cloche de captation mise en œuvre dans le dispositif selon la présente invention est apte à capter et collecter les éléments produits par la découpe laser. On entend par apte à capter et collecter les éléments produits par la découpe laser, le fait que la cloche capte et collecte entre 70 et 100 % des éléments produits, de préférence entre 80 et 100 %, de préférence encore entre 90 et 100%, de façon encore préférée entre 95 et 100%. De préférence, on entend par apte à capter et collecter les éléments produits par la découpe laser, le fait que la cloche capte et collecte entre 80 et 100 % des aérosols produits, de préférence encore entre 90 et 100%, de façon encore préférée entre 95 et 100%.

Dans le dispositif selon l'invention, la cloche de captation est reliée de façon amovible à la tête d'irradiation laser, cela permet de pouvoir retirer la cloche pour assurer son maintien, son nettoyage ou encore pour la remplacer si besoin. Dans tous les cas, on entend par « reliée » à la tête d'irradiation laser, le fait que la cloche de captation est solidaire, fixée à la tête d'irradiation laser.

L'échappement de la pièce évidée permet le passage des éléments produits lors de la découpe laser en direction d'un système de collecte et de transport, avec lequel l'échappement communique c'est-à-dire est relié directement ou indirectement.

La buse de soufflage comprise dans la cloche de captation est reliée à un compresseur d'air-de sorte à émettre un flux d'air comprimé. Le flux d'air comprimé émis par la buse de soufflage selon la présente invention présente un débit compris entre 100 et 2000 litres/minute de préférence entre 500 et 1000 litre/minute.

La buse de soufflage comprise dans la cloche de captation mise en œuvre dans le dispositif selon l'invention est disposée de sorte à dévier le les éléments produits par la découpe laser, en direction de l'échappement de la pièce évidée.

Dans le cadre de la présente invention, la buse de soufflage comprise par la cloche de captation n'est pas disposée dans l'axe du faisceau laser émis par la tête d'irradiation laser.

Selon un aspect particulier de l'invention, le flux d'air comprimé émis par la buse de soufflage peut comprendre une composition lubrifiante de sorte à lubrifier la pièce évidée et à prolonger sa durée d'utilisation ou encore pour faciliter le transport des éléments produits par la découpe, en direction de l'échappement de la pièce évidée.

La combinaison du flux d'air de chasse émis par le moyen de soufflage compris par la tête d'irradiation laser et du flux d'air comprimé émis par la buse de soufflage comprise par la cloche de captation éventuellement couplé à une composition lubrifiante, permet avantageusement de minimiser l'apport en air nécessaire au sein du système de collecte et de transport pour le transport et la collecte des éléments produits par la découpe.

En particulier, dans le dispositif selon la présente invention l'échappement de la pièce évidée communique avec un système de collecte et de transport des éléments produits par la découpe laser. Le système de collecte et de transport des éléments produits par la découpe comprend des gaines d'extraction, un ventilateur d'extraction éventuellement couplé à un ou plusieurs convoyeurs pneumatiques et un ou plusieurs filtres de moyenne, haute et/ou très haute efficacité. La présence éventuelle d'un convoyeur pneumatique permet de remettre en suspension au sein des gaines du système, les éléments produits lors de la découpe qui auraient sédimenté. Le ventilateur d'extraction permet d'assurer une vitesse élevée du flux d'air comprenant les éléments produits par la découpe laser au sein du système de collecte et de transport, et plus particulièrement au sein des gaines d'extraction dudit système. De préférence, la vitesse du flux d'air comprenant les éléments produits par la découpe laser au sein du système de collecte et de transport est comprise entre 17 mètres/seconde et 35 mètres/seconde. Cette vitesse élevée permet avantageusement de s'assurer que l'ensemble des éléments produits traverse les gaines d'extraction ainsi que le ou les filtres, et ne s'accumule pas au sein du système de collecte et de transport.

De préférence, le système de collecte et de transport comprend plusieurs filtres de moyenne, haute et/ou très haute efficacité. Parmi les filtres de moyenne ou haute efficacité on peut faire référence aux filtres séparateurs à effet mécanique qui permettent de filtrer les éléments produits qui présentent une taille supérieure à 5 µm, tels que les poussières et les scories. Lorsqu'un filtre de moyenne/haute efficacité de type séparateur à effet mécanique est mis en œuvre, celui-ci est avantageusement couplé à un compartiment permettant de collecter lesdits éléments. Les filtres de très haute efficacité tels que le filtre THE permettent de filtrer tous les éléments produits qui n'auraient pas été filtrés auparavant, par exemple les aérosols de petite taille.

Dans un mode de réalisation particulier de l'invention, le système de collecte et de transport comprend des gaines d'extraction, au moins un ventilateur éventuellement couplé à un ou plusieurs convoyeurs pneumatiques, un filtre de moyenne/haute efficacité tel qu'un filtre séparateur à effet mécanique et un filtre de très haute efficacité. Dans ce mode de réalisation, le filtre de moyenne/haute efficacité est disposé en amont du filtre de très haute efficacité. De préférence, dans ce mode de réalisation le filtre de moyenne/haute efficacité est couplé à un compartiment permettant de collecter les éléments filtrés, à avoir les éléments présentant une taille comprise supérieure à 5 µm, tels que les scories.

La pièce évidée de la cloche de captation selon la présente invention peut être composée par exemple d'acier inoxydable, d'acier, de titane, d'acier revêtu d'un revêtement spécial utilisé dans l'industrie du soudage tel que le graphite, le carbure de tungstène, la zircone, un bain anti-adhérent utilisé dans l'industrie du soudage (anti grattons) ou encore d'un alliage de métaux tel que ceux comprenant de fortes proportions de nickel, chrome et fer comme l'INCONEL^{®} 718 composé de l'alliage NiCr19Fe19Nb5Mo3, l'INCONEL^{®} 600 composé de l'alliage Ni72Cr14Fe6, l'INCONEL^{®} 625 composé de l'alliage NiCr22Mo9Nb. Selon un aspect particulier, la pièce évidée est composée d'un matériau choisi parmi : l'alliage NiCr19Fe19Nb5Mo3, l'acier inoxydable, le titane ou un acier revêtu d'un revêtement spécial utilisé dans l'industrie du soudage tel que le graphite, le carbure de tungstène, la zircone, un bain anti-adhérent utilisé dans l'industrie du soudage (anti grattons). La cloche de captation selon l'invention et en particulier la pièce évidée peut comprendre un revêtement permettant par exemple d'en améliorer la solidité, d'en prolonger la durée de vie et/ou de diminuer l'adhérence des éléments produits de sorte à améliorer la collecte et le transport desdits éléments. Ce revêtement peut par exemple être une composition lubrifiante.

Selon un aspect particulier de l'invention, l'échappement de la pièce évidée présente une forme coudée. Plus particulièrement, la forme coudée de la pièce évidée se situe entre l'entrée de la pièce évidée et le système de collecte et de transport, au niveau de l'échappement de la pièce. Cette forme coudée permet avantageusement de limiter l'encombrement total du système constitué des éléments de captation et la tête d'irradiation laser.

L'épaisseur de la pièce à découper peut varier de quelques millimètres à 200 mm. Selon l'épaisseur à découper, la vitesse de découpe peut varier de 1 cm/min à 20 cm/min.

Selon la présente invention, le dispositif est un dispositif pour la découpe laser d'une pièce côté débouchant, dans lequel la cloche de captation est reliée de façon amovible à la tête d'irradiation laser (1) de sorte à être disposée du côté de la pièce (4) à découper opposé à celui sur lequel le faisceau laser (2) est destiné à être appliqué et dans lequel la cloche de captation est disposée à une distance comprise entre 10 mm et 100 mm par rapport au côté de la pièce (4) à découper opposé à celui sur lequel le faisceau laser (2) est destiné à être appliqué.

Ce mode de réalisation est illustré dans figure 1, où on y distingue une tête d'irradiation laser (1) d'un laser de puissance apte à émettre un faisceau laser (2) et un flux d'air de chasse (3) en direction de la pièce à découper (4), une cloche de captation des éléments produits par la découpe reliée de façon amovible à la tête d'irradiation laser, ladite cloche comprenant a) une pièce évidée (5) comprenant un échappement (7) et b) une buse de soufflage (6) apte à émettre un flux d'air comprimé (8) en direction de l'échappement (7) de la pièce évidée (5).

Sur la figure 1, illustrant ce mode de réalisation particulier, on distingue également dans la pièce évidée (5), un premier orifice (9) situé à l'entrée de la pièce apte à laisser passer le faisceau laser et le flux d'air de chasse émis par la tête d'irradiation laser, un deuxième orifice (10) aligné avec le premier orifice, apte à laisser passer le faisceau laser, un troisième orifice (11) communiquant avec un échappement (7), un quatrième orifice (12) communiquant avec une buse de soufflage (6) apte à émettre un flux d'air comprimé (8) en direction du troisième orifice (11).

Dans cette configuration, le faisceau laser (2) émis par la tête d'irradiation laser (1) fait fondre la pièce à découper (4) et les éléments produits par la découpe laser sont projetés au sein de la pièce évidée par le flux d'air de chasse (3) émis par ladite tête du côté de la pièce à découper opposé à celui sur lequel le faisceau laser (2) est appliqué. Le flux d'air comprimé (8) émis par la buse de soufflage (6) permet de dévier le flux d'air comprenant lesdits éléments en direction de l'échappement (7) de la pièce évidée (5) qui est relié à un système de collecte et de transport de ces éléments.

Plus précisément, lorsque le dispositif selon l'invention est mis en œuvre pour la découpe d'une pièce côté débouchant, le faisceau laser traverse la pièce de part en part et la cloche de captation est disposée du côté de la face arrière de la pièce à découper, c'est-à-dire la face opposée à celle sur laquelle le faisceau laser est appliqué. Plus précisément dans ce mode de réalisation, la pièce évidée est disposée en vis-à-vis de la face arrière de la pièce à découper.

De préférence dans ce mode de réalisation, la cloche de captation et en particulier la pièce évidée, est disposée à une distance comprise entre 10 mm et 50 mm par rapport à la pièce à découper. Cette distance permet de disposer la cloche de captation au plus près de la pièce à découper de sorte à collecter une quantité maximale d'éléments produits lors de la découpe tout en évitant que la cloche de captation et en particulier la pièce évidée, ne soit trop près de la pièce à découper et soit endommagée par la chaleur de la pièce à découper du fait de l'application du faisceau laser sur ladite pièce.

Dans ce mode de réalisation, la tête d'irradiation laser comprend un moyen de soufflage, de préférence une buse de soufflage, disposé autour de la source de lumière et du module optique. Dans ce mode de réalisation, le moyen de soufflage émet un flux d'air de chasse, c'est-à-dire un flux d'air comprimé dans la même direction que le faisceau laser, en direction du point d'impact dudit faisceau sur la pièce.

En particulier dans ce mode de réalisation, dans lequel la pièce évidée (5) comprend :
- un premier orifice (9) situé à l'entrée de la pièce (4) apte à laisser passer le faisceau laser (2) et le flux d'air de chasse (3) émis par la tête d'irradiation laser (1),
- un deuxième orifice (10) aligné avec le premier orifice (9), apte à laisser passer le faisceau laser (2),
- un troisième orifice (11) communiquant avec un échappement (7), ledit échappement communiquant avec un système de collecte et de transport des éléments produits lors de la découpe
- un quatrième orifice (12) communiquant avec une buse de soufflage (6) apte à émettre un flux d'air comprimé (8) en direction du troisième orifice (11).

De préférence, le premier orifice (9) présente un diamètre compris entre 40 mm et 120 mm selon la typologie de la découpe, le deuxième orifice (10) présente un diamètre compris entre 20 à 60 mm, l'échappement (7) présente un diamètre compris entre 35 à 60 mm et remonte en direction de la tête d'irradiation laser.

Le quatrième orifice (12) est situé entre le premier orifice (9) et le troisième orifice (11) communiquant avec l'échappement (7), entre 10 mm et 50 mm du premier orifice (9).

Plus particulièrement, le quatrième orifice (12) forme un angle compris entre 45 et 90 degrés, de préférence 70 degrés par rapport à un axe formé par le faisceau laser (2) émis par la tête d'irradiation laser (1).

Plus particulièrement encore, le quatrième orifice de la pièce évidée est disposé de sorte à former un angle compris entre 0 et 90 degrés par rapport au troisième orifice communiquant avec l'échappement.

Dans un autre mode de réalisation du dispositif qui n'est pas couvert par la présente invention, le dispositif est un dispositif pour la découpe laser d'une pièce côté non débouchant, dans lequel la cloche de captation est reliée de façon amovible à la tête d'irradiation laser (1) et est disposée du côté de la pièce à découper (4) correspondant à celui sur lequel le faisceau laser (2) est destiné à être appliqué.

Ce mode de réalisation est illustré en figure 2, sur laquelle on distingue une tête d'irradiation laser (1) d'un laser de puissance apte à émettre un faisceau laser (2) et un flux d'air de chasse (3) via un moyen de soufflage (14) en direction de la pièce à découper (), une cloche de captation des éléments produits par la découpe reliée de façon amovible à la tête d'irradiation laser, ladite cloche comprenant a) une pièce évidée (5) comprenant un échappement (7 ) et b) une buse de soufflage (6) apte à émettre un flux d'air comprimé (8) en direction de l'échappement (7) de la pièce évidée (5).

Dans cette configuration, le faisceau laser émis par la tête d'irradiation laser fait fondre la pièce à découper, le moyen de soufflage (14) et la buse de soufflage (6) sont montées sur un module (13) solidaire de la tête d'irradiation.

Dans ce mode de réalisation, le faisceau laser ne traverse pas la pièce à découper de part en part. En particulier, dans ce mode de réalisation, la pièce évidée (5) présente une ouverture sur la partie basse faisant face à la pièce à découper. De préférence, cette ouverture présente un diamètre compris entre 10 mm à 50 mm.

En particulier, dans ce mode de réalisation l'échappement (7) de la pièce évidée (5) est directement relié à la tête d'irradiation laser (1) et la buse de soufflage (6) est reliée à ladite tête via un module solidaire (13) de la tête d'irradiation laser (1).

Dans ce mode de réalisation, la tête d'irradiation laser comprend un moyen de soufflage disposé sur le module solidaire de la tête d'irradiation, ledit module faisant partie de la tête d'irradiation. Le moyen de soufflage émet un flux d'air comprimé dit flux d'air de chasse, en direction du point d'impact du faisceau laser sur la pièce à découper. De préférence, le moyen de soufflage compris par la tête d'irradiation laser est une buse de soufflage éventuellement reliée à un compresseur d'air.

Dans ce mode de réalisation, la cloche de captation forme un ensemble fermé au niveau de la tête d'irradiation laser, en particulier autour de ladite tête et ouvert au niveau de la pièce à découper. De préférence, cet ensemble fermé comprend le module solidaire de la tête d'irradiation, sur lequel on retrouve le moyen de soufflage compris par la tête d'irradiation laser et la buse de soufflage comprise par la cloche de captation.

Dans ce mode de réalisation particulier, la distance entre la cloche de captation et la pièce à découper est déterminée par la distance entre la tête d'irradiation et la pièce à découper. De préférence, l'échappement de la pièce évidée et la buse de soufflage se trouvent à une distance comprise entre 10 et 40 mm de la pièce à découper, de préférence à environ 20 mm de ladite pièce.

Plus particulièrement selon ce mode de réalisation, la buse de soufflage (6) est disposée de sorte que le flux d'air comprimé (8) émis par ladite buse forme un angle compris entre 70 et 135 degrés par rapport à un axe formé par le faisceau laser (2) émis par la tête d'irradiation laser (1). Plus précisément, le flux d'air de chasse est émis par le moyen de soufflage compris par la tête d'irradiation laser.

Plus particulièrement selon ce mode de réalisation, l'échappement (7) de la pièce évidée (5) forme un angle compris entre 30 et 70 degrés, de préférence 30 degrés par rapport à la pièce à découper (4).

Selon un aspect particulier de ce mode de réalisation, la buse de soufflage est disposée de sorte à former un angle compris entre 70 et 135 degrés, de préférence 120 degrés par rapport à un axe formé par le flux d'air de chasse émis par la tête d'irradiation laser et l'échappement de la pièce évidée forme un angle compris entre 30 et 70 degrés, de préférence 30 degrés par rapport à la pièce à découper.

La pièce évidée de la cloche de captation selon la présente invention peut être composée par exemple d'acier inoxydable, d'acier, de titane, d'acier revêtu d'un revêtement spécial utilisé dans l'industrie du soudage tel que le graphite, le carbure de tungstène, la zircone, un bain anti-adhérent utilisé dans l'industrie du soudage (anti grattons) ou encore d'un alliage de métaux tel que ceux comprenant de fortes proportions de nickel, chrome et fer comme l'INCONEL^{®} 718 composé de l'alliage NiCr19Fe19Nb5Mo3, l'INCONEL^{®} 600 composé de l'alliage Ni72Cr14Fe6, l'INCONEL^{®} 625 composé de l'alliage NiCr22Mo9Nb. Selon un aspect particulier, la pièce évidée est composée d'un matériau choisi parmi : l'alliage NiCr19Fe19Nb5Mo3, l'acier inoxydable, le titane ou un acier revêtu d'un revêtement spécial utilisé dans l'industrie du soudage tel que le graphite, le carbure de tungstène, la zircone, un bain anti-adhérent utilisé dans l'industrie du soudage (anti grattons).

En particulier, l'échappement de la pièce évidée présente une forme coudée.

Un second objet de la présente invention concerne un procédé de découpe laser d'une pièce et de collecte des éléments produits par la découpe mettant en œuvre un dispositif selon le premier objet, dans lequel successivement:
- la pièce à découper (4) est disposée dans l'axe d'un faisceau laser (2) émis par une tête d'irradiation (1) d'un laser de puissance
- une cloche de captation des éléments produits par la découpe est reliée de façon amovible à la tête d'irradiation laser (1), comprenant a) une pièce évidée (5) comprenant un échappement (7) et b) une buse de soufflage (6) apte à émettre un flux d'air comprimé (8) en direction de l'échappement (7) de la pièce évidée (5)
- la tête d'irradiation laser (1) émet un faisceau laser (2) couplé à un flux d'air de chasse (3),
- la buse de soufflage (6) émet un flux d'air comprimé (8) en direction de l'échappement (7) de la pièce évidée (5), apte à diriger les éléments produits lors de la découpe en direction de l'échappement (7).

Dans le procédé selon l'invention, la tête d'irradiation laser émet un flux d'air de chasse qui correspond à un flux d'air comprimé via un moyen de soufflage compris par ladite tête. Selon un premier aspect, le moyen de soufflage est disposé autour de la tête d'irradiation laser et plus particulièrement autour de la source de lumière et du module optique de la tête d'irradiation laser. Selon un second aspect, le moyen de soufflage est disposé sur un module solidaire de la tête d'irradiation, ledit module faisant partie de la tête d'irradiation. Selon chacun des aspects ci-dessus, le moyen de soufflage émet un flux d'air de chasse, en direction du point d'impact du faisceau laser sur la pièce à découper.

En particulier dans le procédé selon l'invention, le faisceau laser émis par la tête d'irradiation du laser de puissance présente une longueur d'ondes comprise entre 650 et 1090 nm, de préférence entre 1030 et 1070 nm. De préférence encore, le faisceau laser émis par la tête d'irradiation présente une puissance comprise entre 4 et 14 kW.

De préférence dans le cadre de la présente invention le flux d'air de chasse émis par la tête d'irradiation présente un débit compris entre 100 et 2000 litres/minute.

Selon un aspect particulièrement préféré, la tête d'irradiation du laser de puissance émet un faisceau laser d'une longueur d'ondes comprise entre 1030 et 1070 nm, avec une puissance comprise entre 4 et 14 kW et émet un flux d'air de chasse présentant un débit compris entre 400 et 2000 litres/minute.

Dans le procédé selon l'invention, l'échappement de la pièce évidée permet le passage des éléments produits lors de la découpe laser en direction d'un système de collecte et de transport des éléments produits, avec lequel l'échappement communique c'est-à-dire est relié directement ou indirectement.

Dans le procédé selon l'invention, la buse de soufflage émet un flux d'air comprimé déviant les éléments produits par la découpe laser en direction de l'échappement de la pièce évidée.

La buse de soufflage comprise dans la cloche de captation est reliée à un compresseur d'air.

En particulier, la buse de soufflage (6) émet un flux d'air comprimé (8) présentant un débit compris entre 400 L/min et 2000 L/min.

Selon un aspect particulier de l'invention, le flux d'air comprimé émis par la buse de soufflage comprend une composition lubrifiante pour lubrifier la pièce évidée.

Dans le procédé selon la présente invention, les éléments produits par la découpe laser de la pièce peuvent être des particules, des poussières, des fumées, des scories, des aérosols. Les aérosols peuvent par exemple avoir une taille comprise entre 100 nm et 10 µm. Les poussières peuvent par exemple avoir une taille comprise entre 10 µm et 500 µm. Les scories peuvent par exemple avoir une taille comprise entre 500 µm et 10 mm.

Selon un aspect particulier, la pièce à découper comprend des éléments radioactifs de sorte que tout ou partie des éléments produits par la mise en œuvre du procédé selon la présente invention sont des éléments radioactifs.

Selon ce procédé, les éléments produits par la découpe laser sont déviés vers l'échappement de la pièce évidée puis dirigés vers un système de collecte et de transport avec lequel l'échappement communique, c'est-à-dire est relié directement ou indirectement.

Le système de collecte et de transport des éléments produits lors de la mise en œuvre du procédé de découpe comprend des gaines d'extraction, un ventilateur d'extraction éventuellement couplé à un ou plusieurs convoyeurs pneumatiques et un ou plusieurs filtres de moyenne, haute et/ou très haute efficacité. La présence éventuelle d'un convoyeur pneumatique permet de remettre en suspension des particules en gaine, le ventilateur d'extraction permet d'assurer une vitesse élevée du flux d'air comprenant les éléments produits par la découpe laser au sein du système de collecte et de transport, et plus particulièrement au sein des gaines d'extraction dudit système. De préférence, la vitesse du flux d'air comprenant les éléments produits par la découpe laser au sein du système de collecte et de transport est comprise entre 17 mètres/seconde et 35 mètres/seconde. Cette vitesse élevée permet avantageusement de s'assurer que l'ensemble des éléments produits traverse les gaines d'extraction ainsi que le ou les filtres et ne s'accumule pas au sein du système de collecte et de transport.

Dans le procédé selon l'invention, les éléments produits sont collectés grâce à des filtres de moyenne, haute et/ou très haute efficacité, de préférence des filtres de haute et/ou très haute efficacité, lesdits filtres étant disposés dans les gaines d'extraction du système de collecte et de transport. Selon un aspect préféré du procédé selon l'invention, les éléments produits présentant une taille supérieure à 5 µm, tels que les scories et poussières sont collectés, filtrés par un filtre de moyenne/haute efficacité tel qu'un séparateur à effet mécanique, ledit séparateur étant de préférence couplé à un compartiment de collecte desdits éléments et les éléments produits n'ayant pas été collectés, tels que les poussières et aérosols de petites tailles sont collectés, filtrés par un filtre de très haute efficacité.

La présente invention concerne un procédé selon le second objet de l'invention pour la découpe laser d'une pièce côté débouchant, dans lequel la cloche de captation est disposée du côté de la pièce à découper (4) opposé à celui sur lequel le faisceau laser (2) est appliqué et à une distance comprise entre 10 mm et 100 mm par rapport à la pièce à découper, ledit faisceau laser traversant la pièce à découper de part en part.

La cloche de captation est disposée du côté de la face arrière de la pièce à découper, c'est-à-dire la face opposée à celle sur laquelle le faisceau laser est appliqué. Plus précisément dans ce mode de réalisation, la pièce évidée et en particulier le premier orifice de ladite pièce, est disposée en vis-à-vis de la face arrière de la pièce à découper.

De préférence, la cloche de captation et en particulier la pièce évidée, est disposée à une distance comprise entre 10 mm et 50 mm par rapport à la pièce à découper. Cette distance permet de disposer la cloche de captation au plus près de la pièce à découper de sorte à collecter une quantité maximale d'éléments produits lors de la découpe tout en évitant que la cloche de captation et en particulier la pièce évidée, ne soit trop près de la pièce à découper et soit endommagée par la chaleur de la pièce à découper du fait de l'application du faisceau laser sur ladite pièce.

La tête d'irradiation laser comprend un moyen de soufflage de préférence une buse de soufflage, disposé autour de la tête d'irradiation laser et plus particulièrement autour de la source de lumière émettant un faisceau laser et du module optique de la tête d'irradiation laser. Dans ce mode de réalisation, le moyen de soufflage émet un flux d'air de chasse, c'est-à-dire un flux d'air comprimé dans la même direction que le faisceau laser, en direction du point d'impact dudit faisceau sur la pièce.

De préférence, la pièce évidée de la cloche de captation mise en œuvre dans le procédé comprend :
- un premier orifice situé à l'entrée de la pièce apte à laisser passer le faisceau laser et le flux d'air de chasse émis par la tête d'irradiation laser,
- un deuxième orifice aligné avec le premier orifice, apte à laisser sortir le faisceau laser,
- un troisième orifice correspondant à l'échappement, communiquant avec un système de collecte et de transport apte à transporter les éléments produits lors de la découpe
- un quatrième orifice communiquant avec la buse de soufflage apte à émettre un flux d'air en direction du troisième orifice, lesdits troisième et quatrième orifices étant disposés sur des côtés opposés de la pièce évidée.

En particulier selon ce mode de réalisation, le flux d'air comprimé (8) émis par la buse de soufflage (6) forme un angle compris entre 45 et 90 degrés, de préférence 70 degrés par rapport à un axe formé par le faisceau laser (2) émis par la tête d'irradiation laser (1).

Plus particulièrement encore, le flux d'air comprimé émis par la buse de soufflage forme un angle compris entre 0 et 90 degrés par rapport à l'échappement de la pièce.

## Revendications

1. Dispositif de découpe laser d'une pièce et de collecte des éléments produits par la découpe, comprenant :
- un laser de puissance apte à découper la pièce (4), comprenant une tête d'irradiation laser (1) apte à émettre un faisceau laser (2) et un flux d'air de chasse (3) et
- une cloche de captation des éléments produits par la découpe reliée de façon amovible à la tête d'irradiation laser (1), ladite cloche comprenant a) une pièce évidée (5) comprenant un échappement (7) et b) une buse de soufflage (6) apte à émettre un flux d'air comprimé (8) en direction de l'échappement (7) de la pièce évidée (5) et **caractérisé en ce que** la cloche de captation est reliée de façon amovible à la tête d'irradiation laser (1) de sorte à être disposée du côté de la pièce (4) à découper opposé à celui sur lequel le faisceau laser (2) est destiné à être appliqué de manière à être, lors de l'utilisation du dispositif, disposée à une distance comprise entre 10 mm et 100 mm par rapport au côté de la pièce (4) à découper opposé à celui sur lequel le faisceau laser (2) est destiné à être appliqué.

2. Dispositif selon la revendication 1 dans lequel la pièce évidée (5) comprend :
- un premier orifice (9) situé à l'entrée de la pièce (4) apte à laisser passer le faisceau laser (2) et le flux d'air de chasse (3) émis par la tête d'irradiation laser (1),
- un deuxième orifice (10) aligné avec le premier orifice (9), apte à laisser passer le faisceau laser (2),
- un troisième orifice (11) communiquant avec un échappement (7), ledit échappement communiquant avec un système de collecte et de transport des éléments produits lors de la découpe
- un quatrième orifice (12) communiquant avec une buse de soufflage (6) apte à émettre un flux d'air comprimé (8) en direction du troisième orifice (11).

3. Dispositif selon la revendication 2, dans lequel le quatrième orifice (12) forme un angle compris entre 45 et 90 degrés par rapport à un axe formé par le faisceau laser (2) émis par la tête d'irradiation laser (1).

4. Procédé de découpe laser d'une pièce côté débouchant et de collecte des éléments produits par la découpe mettant en œuvre un dispositif selon l'une des revendications 1 à 3, dans lequel successivement:
- la pièce à découper (4) est disposée dans l'axe d'un faisceau laser (2) émis par une tête d'irradiation (1) d'un laser de puissance
- une cloche de captation des éléments produits par la découpe est reliée de façon amovible à la tête d'irradiation laser (1), de manière à être disposée du côté de la pièce à découper (4) opposé à celui sur lequel le faisceau laser (2) et à une distance comprise entre 10 mm et 100 mm par rapport à la pièce à découper, ladite cloche comprenant a) une pièce évidée (5) comprenant un échappement (7) et b) une buse de soufflage (6) apte à émettre un flux d'air comprimé (8) en direction de l'échappement (7) de la pièce évidée (5)
- la tête d'irradiation laser (1) émet un faisceau laser (2) couplé à un flux d'air de chasse (3), ledit faisceau laser traversant la pièce à découper de part en part,
- la buse de soufflage (6) émet un flux d'air comprimé (8) en direction de l'échappement (7) de la pièce évidée (5), apte à diriger les éléments produits lors de la découpe en direction de l'échappement (7).

5. Procédé selon la revendication 4 dans lequel la buse de soufflage (6) émet un flux d'air comprimé (8) présentant un débit compris entre 400 L/min et 2000 L/min.

6. Procédé selon la revendication 4, dans lequel le flux d'air comprimé (8) émis par la buse de soufflage (6) forme un angle compris entre 45 et 90 degrés, par rapport à un axe formé par le faisceau laser (2) émis par la tête d'irradiation laser (1).

## Patentansprüche

1. Vorrichtung zum Laserschneiden eines Teils und zum Sammeln der Elemente, die durch das Schneiden erzeugt werden, umfassend:
- einen Leistungslaser, der geeignet ist, um das Teil (4) zu schneiden, umfassend einen Laserbestrahlungskopf (1), der geeignet ist, um einen Laserstrahl (2) und eines Spülluftstroms (3) zu emittieren, und
- eine Auffangglocke für Elemente, die durch den Schnitt erzeugt werden, die abnehmbar mit dem Laserbestrahlungskopf (1) verbunden ist, die Glocke umfassend a) ein ausgehöhltes Teil (5), umfassend einen Auslass (7), und b) eine Blasdüse (6), die geeignet ist, um einen Strom komprimierter Luft (8) in Richtung des Auslasses (7) des ausgehöhlten Teils (5) zu emittieren, und **dadurch gekennzeichnet, dass** die Aufnahmeglocke abnehmbar mit dem Laserbestrahlungskopf (1) verbunden ist, sodass sie auf der Seite des zu schneidenden Teils (4) gegenüber jener angeordnet ist, auf die der Laserstrahl (2) angewandt werden soll, sodass sie im Gebrauch der Vorrichtung in einem Abstand zwischen 10 mm und 100 mm von der Seite des zu schneidenden Werkstücks (4) gegenüber jener angeordnet ist, auf die der Laserstrahl (2) angewandt werden soll.

2. Vorrichtung nach Anspruch 1, wobei das ausgehöhlte Teil (5) Folgendes umfasst:
- eine erste Öffnung (9), die sich an dem Eingang des Teils (4) befindet und geeignet ist, um den Laserstrahl (2) und den Spülluftstrom (3), der von dem Laserbestrahlungskopf (1) emittiert wird, durchzulassen,
- eine zweite Öffnung (10), die mit der ersten Öffnung (9) ausgerichtet ist, die geeignet ist, um den Laserstrahl (2) durchzulassen,
- eine dritte Öffnung (11), die mit einem Auslass (7) in Verbindung ist, wobei der Auslass mit einem System zum Sammeln und Transportieren der Elemente in Verbindung ist, die beim Schneiden erzeugt werden
- eine vierte Öffnung (12), die mit einer Blasdüse (6) in Verbindung ist, die geeignet ist, um einen Druckluftstrom (8) in Richtung der dritten Öffnung (11) zu emittieren.

3. Vorrichtung nach Anspruch 2, wobei die vierte Öffnung (12) einen Winkel zwischen 45 und 90 Grad in Bezug auf eine Achse bildet, die durch den Laserstrahl (2) gebildet wird, der von dem Laserbestrahlungskopf (1) emittiert wird.

4. Verfahren zum Laserschneiden eines Teils auf der Mündungs- und Sammelseite der Elemente, die durch das Schneiden erzeugt werden, wobei eine Vorrichtung nach einem der Ansprüche 1 bis 3 eingesetzt wird, in der nacheinander:
- das zu schneidende Teil (4) in der Achse eines Laserstrahls (2) angeordnet ist, der von einem Bestrahlungskopf (1) eines Leistungslasers emittiert wird
- eine Auffangglocke der Elemente, die durch das Schneiden erzeugt werden, abnehmbar mit dem Laserbestrahlungskopf (1) verbunden ist, sodass sie auf der Seite des zu schneidenden Teils (4) gegenüber jener, auf die der Laserstrahl (2), und in einem Abstand zwischen 10 mm und 100 mm in Bezug auf das zu schneidende Teil angeordnet ist, die Glocke umfassend a) ein ausgehöhltes Teil (5), umfassend einen Auslass (7), und b) eine Blasdüse (6), die geeignet ist, um einen Strom komprimierter Luft (8) in Richtung des Auslasses (7) des ausgehöhlten Teils (5) zu emittieren,
- wobei der Laserbestrahlungskopf (1) einen Laserstrahl (2) emittiert, der mit einem Spülluftstrom (3) gekoppelt ist, wobei der Laserstrahl das zu schneidende Teil von einer Seite zur anderen durchquert,
- die Blasdüse (6) einen Druckluftstrom (8) in Richtung des Auslasses (7) des ausgehöhlten Teils (5) emittiert, der geeignet ist, um die beim Schneiden erzeugten Elemente in Richtung des Auslasses (7) zu richten.

5. Verfahren nach Anspruch 4 wobei die Blasdüse (6) einen Druckluftstrom (8) emittiert, der eine Durchflussrate zwischen 400 I/Min und 2000 l/Min aufweist.

6. Verfahren nach Anspruch 4, wobei der Druckluftstrom (8), der von der Blasdüse (6) emittiert wird, einen Winkel zwischen 45 und 90 Grad in Bezug auf eine Achse bildet, die durch den Laserstrahl (2) gebildet wird, der von dem Laserbestrahlungskopf (1) emittiert wird.

## Claims

1. A device for laser cutting a part and for collecting the elements produced by the cutting, comprising:
- a power laser able to cut the part (4), comprising a laser irradiation head (1) able to emit a laser beam (2) and an expulsion air flow (3) and
- a chamber for capturing the elements produced by the cutting removably connected to the laser irradiation head (1), said chamber comprising a) a recessed part (5) comprising an exhaust (7) and b) a blowing nozzle (6) able to emit a compressed air flow (8) in the direction of the exhaust (7) of the recessed part (5) **characterized in that** the capture chamber is removably connected to the laser irradiation head (1) so as to be disposed on the side of the part (4) to be cut opposite to the one on which the laser beam (2) is intended to be applied, so as to be when using the device, disposed at a distance comprised between 10 mm and 100 mm relative to the side of the part (4) to be cut opposite to the one on which the laser beam (2) is intended to be applied.

2. The device according to claim 1, wherein the recessed part (5) comprises:
- a first orifice (9) located at the inlet of the part (4), able to allow the laser beam (2) and the expulsion air flow (3) emitted by the laser irradiation head (1) to pass,
- a second orifice (10) aligned with the first orifice (9), able to allow the laser beam (2) to pass,
- a third orifice (11) communicating with an exhaust (7), said exhaust communicating with a system for collecting and transporting elements produced during cutting
- a fourth orifice (12) communicating with a blowing nozzle (6), able to emit a compressed air flow (8) in the direction of the third orifice (11).

3. The device according to claim 2, wherein the fourth orifice (12) forms an angle comprised between 45 and 90 degrees relative to an axis formed by the laser beam (2) emitted by the laser irradiation head (1).

4. A method for laser cutting a part on the through side and for collecting the elements produced by the cutting, implementing a device according to any of claims 1 to 3, wherein successively:
- the part to be cut (4) is disposed in the axis of a laser beam (2) emitted by an irradiation head (1) of a power laser,
- a chamber for capturing the elements produced by the cutting is removably connected to the laser irradiation head (1), so as to be disposed on the side of the part (4) to be cut opposite to the one on which the laser beam (2) is intended to be applied and in which the capture chamber is disposed at a distance comprised between 10 mm and 100 mm relative to the part (4) to be cut, comprising a) a recessed part (5) comprising an exhaust (7) and b) a blowing nozzle (6) able to emit a compressed air flow (8) in the direction of the exhaust (7) of the recessed part (5),
- the laser irradiation head (1) emits a laser beam (2) coupled to an expulsion air flow (3), said laser beam passing right through the part to be cut,
- the blowing nozzle (6) emits a compressed air flow (8) in the direction of the exhaust (7) of the recessed part (5), able to direct the elements produced during cutting in the direction of the exhaust (7).

5. The method according to claim 4 wherein the blowing nozzle (6) emits a compressed air flow (8) having a flow rate comprised between 400 L/min and 2,000 L/min.

6. The method according to claim 4, wherein the compressed air flow (8) emitted by the blowing nozzle (6) forms an angle comprised between 45 and 90 degrees, relative to an axis formed by the laser beam (2) emitted by the laser irradiation head (1).
